(19) Europäisches Patentamt / European Patent Office / Office européen des brevets

(11) **EP 4 650 828 A1**

(12) **EUROPÄISCHE PATENTANMELDUNG**

(43) Veröffentlichungstag:
**19.11.2025 Patentblatt 2025/47**

(21) Anmeldenummer: **24176598.1**

(22) Anmeldetag: **17.05.2024**

(51) Internationale Patentklassifikation (IPC):
**G01S 17/36** (2006.01) **G01S 17/88** (2006.01)
**G06K 7/10** (2006.01)

(52) Gemeinsame Patentklassifikation (CPC):
**G01S 17/88; G01S 17/36;** G06K 7/10811

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **SICK AG**
**79183 Waldkirch (DE)**

(72) Erfinder: **Seitz, Stefan**
**79341 Kenzingen (DE)**

(74) Vertreter: **Manitz Finsterwald**
**Patent- und Rechtsanwaltspartnerschaft mbB**
**Martin-Greif-Straße 1**
**80336 München (DE)**

Bemerkungen:
Die Patentansprüche wurden nach dem Anmeldetag eingereicht (R. 68(4) EPÜ).

(54) **VERFAHREN UND VORRICHTUNGEN ZUM ERMITTELN EINES ABSTANDS EINES OBJEKTS UND EINER OPTISCHEN EIGENSCHAFT DES OBJEKTS**

(57) Ein Verfahren zum Ermitteln eines Abstands eines Objekts und einer optischen Eigenschaft des Objekts weist die folgenden Schritte auf: Aussenden eines optischen Signals; Empfangen des von dem Objekt remittierten optischen Signals; Umwandeln des empfangenen remittierten optischen Signals in ein komplexwertiges Digitalsignal; Ermitteln einer Phase des komplexwertigen Datensignals und einer Amplitude des komplexwertigen Datensignals; Ermitteln des Abstands des Objekts basierend auf der Phase; und Ermitteln der optischen Eigenschaft des Objekts basierend auf der Amplitude.

300

- Aussenden eines optischen Signals — 302
- Empfangen des von dem Objekt remittierten optischen Signals — 304
- Umwandeln des empfangenen remittierten optischen Signals in ein komplexwertiges Digitalsignal — 306
- Ermitteln einer Phase des komplexwertigen Datensignals und einer Amplitude des komplexwertigen Datensignals — 308
- Ermitteln des Abstands des Objekts basierend auf der Phase — 310
- Ermitteln der optischen Eigenschaft des Objekts basierend auf der Amplitude — 312

Fig. 3

EP 4 650 828 A1

**Beschreibung**

Die Erfindung betrifft Verfahren und Vorrichtungen zum Ermitteln eines Abstands eines Objekts und einer optischen Eigenschaft des Objekts, die insbesondere in einem Barcodeleser eingesetzt werden können.

Komplexe industrielle, beispielsweise laserbasierte, Barcodescanner (beispielsweise Scanner, die einen im Wesentlichen eindimensionalen (1D) Code scannen) beinhalten häufig eine zusätzliche Autofokusbaugruppe, um den Sendespot über große Entfernungen hinweg scharfzustellen. Hierdurch kann die Abtastfähigkeit des 1D-Barcodes und somit dessen Lese- sowie Decodierfähigkeit über große Leseabstandsbereiche ermöglicht werden.

Der für die Autofokusbaugruppe nötige technische Mehraufwand schlägt sich aber in der Regel auf die Herstellungskosten nieder, so dass die Technologie meist nur den hochpreisigen High End-Geräten vorbehalten ist.

Herkömmliche Systeme bestehen aus zwei getrennten Schaltungs- und Messpfaden für Grauwertverarbeitung und für Abstandsmesswertverarbeitung.

Hieraus können jedoch hohe schaltungstechnische Aufwände mit entsprechend höherem Bauteil- und Materialeinsatz und/ oder höhere Anforderungen an erforderlichen Bauraum / Gesamt-Gerätegröße resultieren. Insgesamt kann die Systemkomplexität erhöht sein und/ oder es können höhere Herstell- und Gerätekosten auftreten. Die aus den getrennten Signalpfaden bedingten zeitlichen Diskorrelationen zwischen Grauwert- und Abstandsinformationen können zu unterschiedlichem Laufzeit- und Pulsantwortverhalten (z.B. bei abrupten Abstands- und/ oder Grauwertsprüngen) führen, die nicht oder nicht zuverlässig oder nur unbefriedigend korrigierbar sind. Die zeitlichen Diskorrelationen zwischen Grauwert- und Abstandsinformationen können spezielle Software-Korrekturalgorithmen erfordern, um Grau- und Abstandswert möglichst genau zeitlich in Deckung zu bekommen, was jedoch selbst unter erheblichen Aufwänden nicht immer perfekt gelingen kann.

Es ist Aufgabe der Erfindung, die oben genannten Nachteile zu umgehen.

Die Lösung der Aufgabe erfolgt durch ein Verfahren mit den Merkmalen des Anspruchs 1, eine Vorrichtung mit den Merkmalen des Anspruchs 7 und einen Barcodescanner mit den Merkmalen des Anspruchs 15.

Ein erfindungsgemäßes Verfahren zum Ermitteln eines Abstands eines Objekts und einer optischen Eigenschaft des Objekts umfasst folgende Schritte: Aussenden eines optischen Signals; Empfangen des von dem Objekt remittierten optischen Signals; Umwandeln des empfangenen remittierten optischen Signals in ein komplexwertiges Digitalsignal; Ermitteln einer Phase des komplexwertigen Datensignals und einer Amplitude des komplexwertigen Datensignals; Ermitteln des Abstands des Objekts basierend auf der Phase; und Ermitteln der optischen Eigenschaft des Objekts basierend auf der Amplitude.

In anderen Worten werden aus einem empfangenen optischen Signal über ein komplexwertiges Datensignal eine Amplitude und eine Phasenlage des optischen Signals ermittelt.

Das komplexwertige Datensignal kann einen I-Anteil (englisch: In-Phase) und einen Q-Anteil (englisch: Quadrature) haben, die mittels einem I&Q-Verfahren ermittelt werden können.

Die Abstandsinformation kann verwendet werden, um eine Objektgeometrie des Objekts zu erfassen (beispielsweise wenn ein Paket auf einem Förderband bewegt wird; über die optische Eigenschaft des Objekts, beispielsweise einen Grauwert, können dann auch noch Bildinformationen ermittelt werden).

Die Abstandsinformation kann verwendet werden, um eine Autofokusfunktion zu ermöglichen. Die Autofokusfunktion kann anschaulich ein automatisches "Scharfstellen" des Barcodescanners ermöglichen. Obwohl beispielsweise bei Barcodescannern die Schärfentiefe relativ groß ist, kann nicht immer der Barcode sofort scharf erkannt werden. Dann kann mit dem erfindungsgemäßen Verfahren zunächst eine Autofokus-Funktion ausgeführt werden und danach nochmal gemessen werden.

Ferner kann die Abstandsinformation auch in anderen Anwendungen eingesetzt werden, beispielsweise beim Scannen von dreidimensionalen (3D) Objekten.

Gemäß einer Ausführungsform erfolgt das Umwandeln vor dem Ermitteln der Phase und der Amplitude. Dies ermöglicht es, weite Teile des Verfahrens in Software oder auf digitalen Bauteilen auszuführen.

Gemäß einer Ausführungsform erfolgt das Umwandeln nach dem Ermitteln der Phase und der Amplitude. Durch ein Heruntermischen und Aufteilen von I- und Q-Signal bereits im Analogen kann eine Basisbandfilterung der I- und Q-Signale im analogen durchgeführt werden, und dann ein Abtasten des I- und Q-Basisbandes mittels ADCs (analog-Digital-Wandler; ein ADC für den I-Anteil und ein ADC für den Q-Anteil).

Gemäß einer Ausführungsform enthält das Verfahren ferner einen Schritt zum Ändern einer Fokuslage zum Empfangen des von dem Objekt remittierten optischen Signals basierend auf der Abstandsinformation. Damit wird anschaulich eine Autofokus-Funktion bereitgestellt.

Gemäß einer Ausführungsform kann die optische Eigenschaft ein Grauwert oder eine Farbe eines Objekts, von dem das optische Signal remittiert wird, sein. Damit ist anschaulich das Verfahren als bildgebendes Verfahren einsetzbar.

Gemäß einer Ausführungsform ist die Phase eine Phase des empfangenen remittierten optischen Signals relativ zu dem ausgesendeten optischen Signal. Damit kann über die Verschiebung der Phase (in anderen Worten: über den Unterschied zwischen der Phase des empfangenen remittierten optischen Signals und der Phase des ausgesendeten optischen Signal) der Abstand ermittelt werden.

Gemäß einer Ausführungsform wird die Amplitude und/ oder die Phase sampleweise (oder pixelweise) für einen eindimensionalen Datensatz (oder für ein eindimensionales Bild) oder einen zweidimensionalen Datensatz (oder ein zweidimensionales Bild) ermittelt. Dabei ist jedem Sample (oder Pixel) eine Amplitude und eine Phase zugeordnet, so dass dann jedem Sample (oder Pixel) eine Eigenschaft (beispielsweise Grauwert oder Farbe) und ein Abstand zugeordnet werden kann.

Die Aufgabe der Erfindung wird ferner durch eine Vorrichtung zum Ermitteln eines Abstands eines Objekts und einer optischen Eigenschaft des Objekts mit folgenden Merkmalen gelöst: Sender, eingerichtet zum Aussenden eines optischen Signals; Empfänger, eingerichtet zum Empfangen des von dem Objekt remittierten optischen Signals; Wandler, eingerichtet zum Umwandeln des empfangenen remittierten optischen Signals in ein komplexwertiges Digitalsignal; Phase-Amplitude-Ermittlungseinheit, eingerichtet zum Ermitteln einer Phase des komplexwertigen Datensignals und einer Amplitude des komplexwertigen Datensignals; Abstandsermittlungsschaltkreis, eingerichtet zum Ermitteln des Abstands des Objekts basierend auf der Phase; und Eigenschaftsermittlungsschaltkreis, eingerichtet zum Ermitteln der optischen Eigenschaft des Objekts basierend auf der Amplitude.

Gemäß einer Ausführungsform weist die Phase-Amplitude-Ermittlungseinheit einen Phasenermittlungsschaltkreis und einen von dem Phasenermittlungsschaltkreis unabhängigen Amplitudenermittlungsschaltkreis auf, wobei der Phasenermittlungsschaltkreis eingerichtet ist zum Ermitteln der Phase des komplexwertigen Datensignals und wobei der Amplitudenermittlungsschaltkreis eingerichtet ist zum Ermitteln der Amplitude des komplexwertigen Datensignals. Damit können Phase und Amplitude (und damit Abstand und optische Eigenschaft) getrennt voneinander ermittelt werden.

Gemäß einer Ausführungsform ist die Phase-Amplitude-Ermittlungseinheit eingerichtet zum parallelen (oder zumindest im Wesentlichen gleichzeitigen) Ermitteln der Phase des komplexwertigen Datensignals und der Amplitude des komplexwertigen Datensignals. Damit ist eine Verarbeitung von Amplitude und Phase (und damit von Grau- und Abstandwert) in einem gemeinsamen Signalpfad möglich. Es ist also möglich, die Information von Grau- und Abstandswert "in einem Guss" als komplexer Datentyp (mit Amplitude und Phase) als Repräsentant für Grau- und Abstandswert zu gewinnen. Die Amplitude repräsentiert dabei die optische Eigenschaft (beispielsweise den Grauwert oder (beispielsweise bei Verwendung eines entsprechenden Farbfilters) Farbwerts), und die Phase repräsentiert den Abstand.

Gemäß einer Ausführungsform kann der Wandler eingerichtet sein zum Umwandeln vor dem Ermitteln der Phase und der Amplitude. Dies ermöglicht es, weite Teile der Vorrichtung in Software oder mittels digitaler Bauteile zu implementieren.

Gemäß einer Ausführungsform ist der Wandler eingerichtet zum Umwandeln nach dem Ermitteln der Phase und der Amplitude. Das Heruntermischen und Aufteilen von I- und Q-Signal kann bereits im Analogen ausgeführt werden. Die Basisbandbefilterung der I- und Q-Signale kann dann ebenfalls im Analogen durchgeführt werden. Das Abtasten des I- und Q-Basisbandes kann mittels ADCs (einer für I und einer für Q) erfolgen.

Gemäß einer Ausführungsform ist der Empfänger eingerichtet ist zum Ändern einer Fokuslage zum Empfangen des von dem Objekt remittierten optischen Signals basierend auf der Abstandsinformation. Beispielsweise kann der Empfänger eine Linse oder ein Linsensystem haben, und die Konfiguration der Linse oder des Linsensystems kann geändert werden, beispielsweise können Abstände zwischen Linsen und Bildsensor geändert werden.

Gemäß einer Ausführungsform ist die optische Eigenschaft ein Grauwert oder eine Farbe eines Objekts, von dem das optische Signal remittiert wird, ist. Die optische Eigenschaft kann basierend auf der Amplitude, ohne Verwendung der Phase, ermittelt werden.

Gemäß einer Ausführungsform ist die Phase eine Phase des empfangenen remittierten optischen Signals relativ zu dem ausgesendeten optischen Signal. Der Abstand kann basierend auf der Phase, ohne Verwendung der Amplitude, verwendet werden.

Gemäß einer Ausführungsform werden die Amplitude und/ oder die Phase sampleweise (oder pixelweise) für einen eindimensionalen Datensatz (oder für ein eindimensionales Bild) oder einen zweidimensionalen Datensatz (oder ein zweidimensionales Bild) ermittelt. Dabei ist jedem Sample (oder Pixel) eine Amplitude und eine Phase zugeordnet, so dass dann jedem Sample (oder Pixel) eine Eigenschaft (beispielsweise Grauwert oder Farbe) und ein Abstand zugeordnet werden kann.

Die Aufgabe der Erfindung wird ferner durch einen Barcodescanner gelöst, der eine erfindungsgemäße Vorrichtung und einen Aktuator, der eingerichtet ist zum Einstellen einer Fokuslage des Barcodescanners, enthält.

Weitere vorteilhafte Ausgestaltungen der erfindungsgemäßen Verfahren ergeben sich aus den Unteransprüchen, der Zeichnung und der Beschreibung.

Die Erfindung wird nachfolgend anhand von Ausführungsbeispielen mit Bezug auf die Zeichnung beschrieben. Es zeigen in schematischen Darstellungen:

Fig. 1    ein Diagramm zur Veranschaulichung einer Amplitudenmodulation im Spektrum gemäß einer Ausführungsform;

Fig. 2A     ein Diagramm, das ein I/Q-Verfahren gemäß einer Ausführungsform veranschaulicht;

Fig. 2B     eine Veranschaulichung von Real- und Imaginärteilen;

Fig. 3      ein Flussdiagramm, das ein Verfahren zum Ermitteln eines Abstands eines Objekts und einer optischen Eigenschaft des Objekts gemäß einer Ausführungsform veranschaulicht; und

Fig. 4      eine Vorrichtung zum Ermitteln eines Abstands eines Objekts und einer optischen Eigenschaft des Objekts gemäß einer Ausführungsform.

Nachfolgend werden die erfindungsgemäßen Verfahren und Vorrichtungen exemplarisch anhand von Ausführungsbeispielen erläutert.

In Verfahren und Vorrichtungen gemäß verschiedener Ausführungsformen wird das an sich bekannte I/Q-Verfahren angewendet, um hiermit Grauwert- und Abstandsformationen aus einem gemeinsamen komplexwertigen Datensignal, das auf von einem Sensor erzeugten Signalen basiert, zu erhalten. Aus der komplexen Datenebene lassen sich aus dem Datensignal dann Betrag ("|Amplitude| = sqrt($I^2$+$Q^2$)") und Phase ("Phi = arctan(Q/I") berechnen. Betrag und Phase stehen hierbei in direkter Korrelation zum Code/Target-Grau und Abstandswert. I/Q-Verfahren können auch als I&Q-Verfahren (englisch: In-Phase-&-Quadrature-Verfahren) bezeichnet werden und stellen eine Möglichkeit bereit, bei einer Demodulation eines hochfrequenten Trägersignals die Phaseninformation zu erhalten.

In einer Ausführungsform wird das Empfangssignals möglichst früh (beispielsweise vor jeglicher Bearbeitung, oder beispielsweise direkt nach einer ersten Filterung) digitalisiert. Hierdurch ist eine Implementierung aller entscheidender Signalpfadelemente, deren Zusammenwirken, sowie auch deren Algorithmik in Software möglich. Die Implementierung, die auf Software beruht und englischsprachig als "Software Defined" bezeichnet werden kann, lässt sich dann leicht anpassen und/ oder erweitern.

In einer Weiterbildung können die wesentlichen Signalpfadelemente in Software realisiert werden und die Signalpfade können parallelisiert werden (z.B. zwei oder mehr Signalpfade). Die Signalpfade müssen in diesem Fall nicht zwangsläufig identisch implementiert werden bzw. die identischen Setup-Parameter verwenden. Hierdurch lassen sich Stärken und Schwächen der Signalpfade zueinander gut ausgleichen.

Falls zwei Signalpfade identisch implementiert werden, können diese ähnlich in der Funktion eines RDS-(Radio Data System)-Radios (mit der Suche des Stärkeren Senders im Hintergrund) genutzt werden, d.h. der erste Signalpfad übernimmt mit dessen Parametrierung die eigentliche Funktion während der andere Signalpfad versucht, über einen geschickten Parameter-Sweep die Lese- bzw. Messperformance des ersten zu überbieten. Gelingt das, wird dieses Setup erstmal eingefroren und weiterverwendet. Nun kann der Signalpfad mit dem schlechteren Setup wieder zum Parameter-Sweep herangezogen werden und der Performancegewinnversuch startet erneut.

Stellt sich hierbei heraus, dass sich die Leseperformance aufgrund der Streubreite der verwendeten Barcodes (beispielsweise bezüglich Basismaterial, Kontrast, Störstellen, oder Drucktechnik) nicht sicher mit einem einzigen (optimalen) Setup herstellen lässt, können diese Signalpfade, beispielsweise in Abhängigkeit der Code-Eigenschaften, mit unterschiedlichem Parameter-Setups verwendet werden. In solchen Fällen kann noch ein weiterer Signalpfad zur Setup-Optimierung mittels Parameter-Sweep verwendet werden.

In einer Implementierung, die "Software Defined" erfolgt, ist der Einfluss auf Baugröße und er Anzahl verwendeter Bauteile nicht relevant. Eine Grenze kann erst erreicht sein, wenn die Ressourcen bzgl. FPGA-(Field Programmable Gate Array) Blöcke bzw. verfügbarer Prozessor-Rechenleistung aufgebraucht sind.

In einer Ausführungsform kann bei der in Software implementierbaren Signalpfadkette nur eine Teilmenge der gesamten Signalpfadkette doppelt oder mehrfach implementiert sein, beispielsweise die vorderen Teile der Bearbeitung, die auch gemeinsam genutzt werden können.

Der Sensor kann eine optische Sendeeinheit enthalten. Die optische Sendeeinheit kann ein mit Festfrequenz moduliertes, bevorzugt oberwellenarmes, CW-Trägersignal (wobei CW in englischer Sprache für "continuous wave" oder "continuous waveform" (deutsch: ununterbrochene Welle) steht) emittieren. Das Trägersignal kann beispielsweise mittels Laserdiode als optisches Sendeelement emittiert werden. Das Sendeelement kann ein elektrisches Signal in ein optisches Signal umwandeln.

Eine Trägerfrequenz des Trägersignals bestimmt den Eindeutigkeitsbereich für den Abstandsmessbereich. Durch die Trägerfrequenz kann auch eine sinnvolle, obere Grenze vorgegeben werden, wobei Eindeutigkeit innerhalb von 360° gegeben ist.

Der Eindeutigkeitsbereich ergibt sich wie folgt:

$$dist_{Singlicity} = \frac{1}{2} * \frac{c_{Light}}{f_{Carrier}}$$

Der Faktor ½ ergibt sich dabei aus Hin- und Rückweg des Lichtes, der Eindeutigkeitsbereich in Metern (m) ist mit $dist_{Singlicity}$ bezeichnet, die Trägerfrequenz in Hertz (Hz) ist mit $f_{Carrier}$ bezeichnet, und die Lichtgeschwindigkeit in Metern pro Sekunde (m/s) ist mit $c_{Light}$ angegeben.

Die Trägerfrequenz kann so gewählt sein, dass sie hoch genug ist, um informationsbeinhaltende Frequenzspektren eines abgescannten Barcodesignals beinhalten zu können, und so dass die die Frequenzspektren eindeutig vom Basisband trennbar sind.

Die resultierende Bandbreite $BW_n$ des abgescannten Barcodes ergibt sich wie folgt:

$$BW_n = \frac{4 * \pi * f_{Scan} * distBarcode}{n_{Facette} * 2 * Mod\_Width} * n$$

Der Faktor n ist positiv ganzzahlig und gibt die Anzahl Vielfacher zur Grundfrequenz an (so dass eine harmonische Frequenz vorliegt) die im Nutzsignal innerhalb der Signalverarbeitung berücksichtigt werden.

Dabei gibt $BW_n$ für den Fall n=1 die Bandbreite ohne harmonische Oberfrequenzen in Hertz (Hz) an. $f_{Scan}$ gibt die Scanfrequenz (in Hertz (Hz) an. $n_{Facette}$ ist eine ganze Zahl und gibt die Anzahl von Facetten am Polygonspiegelrad im Barcodeleser an. $distBarcode$ gibt den Tastabstand des Barcodes in Metern (m) an. $Mod\_Width$ gibt die Modulbreite des gescannten Barcodes in Metern (m) an.

Die informationsbringende Modulation des optischen Sendesignals kann sensorextern erfolgen über die Target-Remission (also die Remission, oder Reflexion) des ausgesendeten Signals, wobei die Amplitude zur Auswertung des Barcodes selbst verwendet werden kann, sowie den Target-Abstand (also den Abstand zwischen Barcode und Barcodelesegerät, wobei über die Lichtlaufzeit eine Phase bzw. Phasenverschiebung zwischen ausgesendetem Signal und zurückemittierten Signal entsteht).

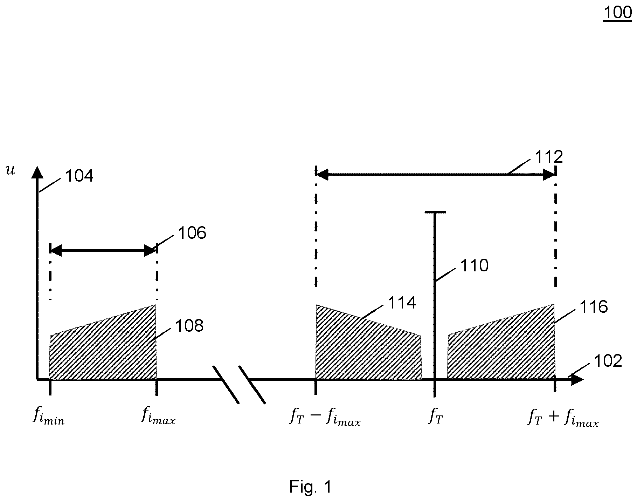

Fig. 1 zeigt ein Diagramm 100 zur Veranschaulichung einer Amplitudenmodulation im Spektrum gemäß einer Ausführungsform. Eine horizontal Achse 102 gibt die Frequenz an, und eine vertikale Achse 104 gibt die Intensität u an. Das Frequenzspektrum 106 von $u_i$ kann zwischen den Frequenzen $f_{imin}$ und $f_{imax}$ liegen, so dass ein ins Basisband heruntergemischtes Barcodesignal im Bereich 108 liegen kann. $u_i$ sind die informationstragenden Amplitudenanteile, welche im Frequenzband zwischen $f_{imin}$ und $f_{imax}$ enthalten sind.

Die Trägerfrequenz $f_T$ 110 des optischen Sendesignals definiert über die Bandbreite (B; englisch: bandwidth, BW) 112 der Nutzinformation des abgescannten Barcodesignals ein unteres Seitenband 114 (USB), beispielsweise zwischen einer Frequenz $f_T$ - $f_{imax}$ und einer Frequenz unterhalb von $f_T$, und ein oberes Seitenband 116 (OSB), beispielsweise zwischen einer Frequenz oberhalb von $f_T$ und einer Frequenz $f_T$ + $f_{imax}$.

Das optisch zurückemittierte und somit nun informationsbeinhaltende Empfangssignal kann durch ein sensorinternes Empfangselement detektiert werden. Das Empfangselement kann beispielsweise eine PIN-Photodiode (englisch: positive intrinsic negative diode) oder eine APD (Avalanche-Photodiode, die auch als Lawinenphotodiode bezeichnet werden kann) sein. Das Empfangselement kann ein zentraler Bestandteil eines optischen Empfängers sein.

Der optische Empfänger kann das noch sehr schwache und hochimpedante Signal vom optischen Empfangselement verstärken und es transformieren und somit dessen Transimpedanzwandlung übernehmen. Hierdurch die Information des empfangenen Signals rauscharm und niederohmig zur geräteinternen Weiterverarbeitung zur Verfügung gestellt.

Eine nachfolgende Signal-Vorkonditionierung kann das Empfangssignal weiter verstärken und filtern und hierdurch ggf. auch noch weiter Nutz- und Störsignale voneinander separieren (was als Bandselektion bezeichnet werden kann). Eine weitere Aufgabe der nachfolgenden Signal-Vorkonditionierung kann die Ansteuerung des nachfolgenden A/D-(Analog-Digital-)Wandlers sein.

Eine frühzeitige Digitalisierung (A/D-Wandlung) des analogen Empfangssignals (auf HF-(Hochfrequenz-)Ebene) kann es ermöglichen, die gesamte I/Q-Demodulation, deren Ableitung von Amplituden- und Phaseninformation sowie deren Weiterverarbeitung komplett auf digitaler Ebene (und somit softwaredefiniert, englisch: softwaredefined) zu vollziehen. Dies bietet eine Flexibilität in der Implementierung, und Updates in der Signalverarbeitung lassen sich einfach per Softwareupdate anpassen und erweitern (was englischsprachig auch als Software Defined Radio bezeichnet werden kann).

Eine Modifikation der Sensor-Hardware kann hierbei nicht erforderlich sein (was englischsprachig als "Software Definded Sensor" bezeichnet werden kann). Dies ermöglicht eine deutliche Verringerung externer Bauteile und eine erhebliche Bauteilreduktion. Ferner können störende Toleranzen und/ oder Temperaturabhängigkeiten externer, meist analoger, Bauteile eliminiert werden (was eine hohe Relevanz für Symmetrie von I- und Q-Kanal haben kann).

Das Empfangssignal, das bereits digitalisiert sein kann, kann in I- und Q-Komponenten zerlegt und entsprechend als komplexer Datentyp weiterverarbeitet werden. Die Verarbeitung von Grauwert- und Abstandsinformationen kann hierbei in einem einzigen Signalpfad erfolgen, so dass Grauwert- und Abstandsinformationen stets in direkter Korrelation zueinanderstehen können.

Eine sensorinterne I/Q-Empfängereinheit kann in direkter, frequenzsynchroner Beziehung zum ebenfalls sensorintern generierten Sendesignal stehen und somit von der gleichen/identischen Referenzfrequenz abgeleitet werden.

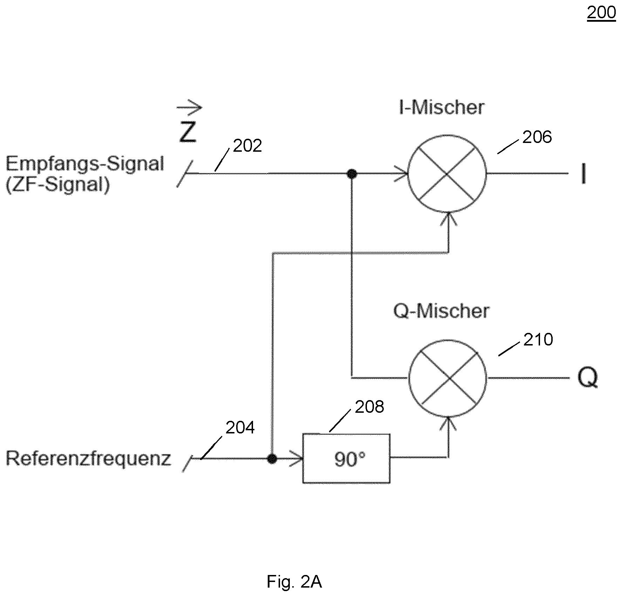

Fig. 2A zeigt ein Diagramm 200, das ein I/Q-Verfahren gemäß einer Ausführungsform veranschaulicht. Ein Empfangssignal 202 wird bereitgestellt und unter Zuhilfenahme einer Referenzfrequenz 204 in einen I-Anteil 206 und (nach einer Phasenverschiebung 208 um 90°) in einen Q-Anteil 210 umgewandelt.

Bei dem Empfangssignal handelt es sich um eine vektoriell gerichtete Signalgröße. Dies wird durch den Pfeil "→" über der Größe "Z" ausgedrückt (also $\vec{Z}$). Durch die beiden, um 90° phasenversetzt gesteuerten Mischer erfolgt die Zerlegung des komplexen Empfangssignal $\vec{Z}$ in dessen beide skalare Einzelkomponenten "I" und "Q". Hierbei repräsentiert I den Realteil und Q den Imaginärteil von $\vec{Z}$.

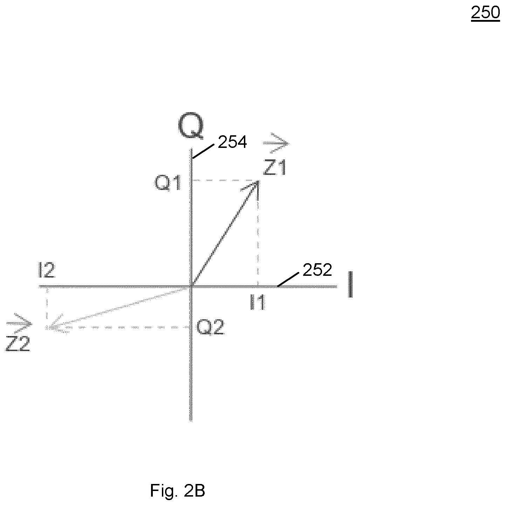

Fig. 2B zeigt eine Veranschaulichung 250 von Real- und Imaginärteilen. Eine horizontale Achse 252 repräsentiert I (also den Realteil) und eine vertikale Achse 254 repräsentiert Q (also den Imaginärteil). Jede vektoriell gerichtet Signalgröße kann als komplexe Zahl dargestellt werden. In Fig. 2B sind die beiden komplexen Zahlen $\vec{Z_1}$ und $\vec{Z_2}$ dargestellt. Der Realteil von $\vec{Z_1}$ ist $I_1$ und der Imaginärteil von $\vec{Z_1}$ ist $Q_1$. In anderen Worten: $\vec{Z_1} = I_1 + i\,Q_1$, wobei $i$ die imaginäre Einheit darstellt (mit $i^2 = -1$). Der Realteil von $\vec{Z_2}$ ist $I_2$ und der Imaginärteil von $\vec{Z_2}$ ist $Q_2$.

Die sensorinterne I/Q-Empfängereinheit kann direkt als Direktmischer ausgeführt werden, wobei die Signalabtastung hier direkt im HF-Band erfolgt (was Englisch als Direct RF-Sampling bezeichnet werden kann). Ferner kann die Bildung einer Zwischenfrequenz bzw. die Anwendung eines Überlagerungsprinzips vorgesehen sein.

Gemäß einer Ausführungsform kann der Referenztakt des I/Q-Detectors exakt mit der 4-fachen Frequenz des Senders betrieben werden. Gemäß einer Ausführungsform kann der Referenztakt des I/Q-Detectors mit einer von der 4-fachen Frequenz des Senders verschiedenen Frequenz betrieben werden.

Ein Mischen bzw. eine I/Q-Signalgenerierung in digitaler Ebene ist dann besonders einfach möglich, wenn der Referenztakt des I/Q-Detektors exakt mit der 4-fachen Frequenz des Senders betrieben wird. Hierdurch kann der +90°-Takt des Q-Kanals/Mischers sehr einfach digital generiert werden, weil sich das hierzu notwendige sin-/cos-Mischsignal für I und Q einfach digital in Form von 0, 1 sowie -1 darstellen lassen. In diesem speziellen Fall lässt sich Sinus und Cosinus immer in Form von diesen Werten repräsentieren (sin = 0,1,0,-1, cos = 1,0,-1,0). Eine Anwendung von aufwändigen Integer- und/ oder sogar Fließkomma-Zahlen und Fließkomma-Rechenarithmetik lässt sich hierdurch elegant umgehen. Mischen heißt in diesem Fall Zahlen mathematisch miteinander zu multiplizieren.

Aufgrund Aliasing kann es gewünscht sein, dass die Abtastrate beim Direktabtasten mindestens das 2-fache der Signalfrequenz (Sendefrequenz incl. darin moduliertes Nutzsignalspektrum) beträgt. Dies ist also Nyquist-/Shannon-Theorem bekannt.

Aufgrund der Target-Helligkeitsmodulation des Sendelichts (in anderen Worten: des gesendeten Signals) entstehen hierauf entsprechend dem Signalinhalt (z.B. Barcode) informationsbeinhaltete Seitenbänder, was auch in Fig. 1 gezeigt ist. Diese Seitenbänder und insbesondere die durch die Seitenbänder resultieren Frequenzanteile innerhalb der Seiten- bzw. Interferenzbänder können berücksichtigt werden (beispielsweise durch ein entsprechend ausgelegtes Aliasingfilter vor dem Analog-Digital-Wandler).

Aus der aus dem jeweiligen Mischer-Ausgang gewonnenen I- und Q-Information kann im Anschluss noch das entsprechende I- und Q-Basisband herausgefiltert werden (beispielsweise mittels eines Tiefpassfilters). Danach können die eigentlichen Nutzinformationsinhalte der I- und Q-Ebene zur Verfügung stehen (wobei HF-Band und evtl. auch weitere unerwünschte Mischprodukte herausgefiltert wurden). Da das Basisband niederfrequenter als das HF-Band ist, kann an dieser Stelle auch eine Signal-Dezimierung/ Mittelung (beispielsweise mittels CIC-Filterimplementierung, Cascaded-Integrator-Comb-Filter) ausgeführt werden.

Gemäß einer Ausführungsform können hierbei die I/Q-Signale bzgl. Laufzeiten / Einschwingen / Befilterung exakt identisch behandelt werden. Dies kann in der digitalen Ebene einfach durch die Implementierung sichergestellt werden, da hier keine Bauteiltoleranzen wie beispielsweise in der analogen Welt in Erscheinung treten. Hierdurch können unerwünschte Störgrößen und/ oder Disbalancen per Design ausgeschlossen werden.

Aus den heruntergemischten I/Q-Informationen können dann Amplitude (die den Grauwert oder einen Farbwert angibt) und Phase (die den Abstand angibt) extrahiert werden. Dabei stehen Abstand und Grauwert "in einem Guss" als komplexer Datentyp zur Weiterverarbeitung im Sensor (beispielsweise einem Bardcodeleser) zur Verfügung (in anderen Worten: Abstand und Grauwert stehen in direkter Korrelation zueinander).

Bei der I/Q-Amplituden/Phasentransformation werden mathematisch trigonometrische Rechenfunktionen verwendet: Die Amplitude ergibt sich aus der Quadratwurzel des Summe der Quadrate von I-Anteil und Q-Anteil ("Amplitude= $\sqrt{(I^2 + Q^2)}$") und die Phase ergibt sich aus dem Atan2 von Q und I ("Phase= atan2(Q, I)").

Gemäß einer Ausführungsform können diese Rechenoperationen effektiv und in ausreichender Rechengenauigkeit in Echtzeit durchgeführt werden. Dazu kann beispielsweise ein CORDIC-Verfahren (englisch: Coordinate Rotation Digital Computer) verwendet werden, oder es werden vereinfachte Näherungsrechnungen verwendet. Alternativ kann auch eine Tabelle (englisch: Lookup-Table) verwendet werden, der für bestimmte Werte die trigonometrischen Funktionen abbildet.

Ein weiterer Aspekt die dieser Transformation zu Grunde liegt, ist die Aufrechterhaltung der Korrelation zwischen Amplitude und Phase, beispielsweise auch unter zeitlichen Gesichtspunkten.

Die I- und Q-Werte befinden sich in der komplexen Zahlenebene und decken hiermit alle vier Quadranten innerhalb dieser ab. Wichtig ist dies bei der Phasenberechnung aus I und Q zu berücksichtigen, um eindeutige Phasenzuordnung über diesen gesamten Bereich von -180° ... +180° (bzw. 0 ... 360°) sicherzustellen (wie auch bzgl. dem physikalischen Eindeutigkeitsbereich weiter oben erläutert). Durch die Anwendung einer einzelnen sin- cos- oder tan-Funktion ist das nicht möglich da hierdurch der Eindeutigkeitsbereich auf max. 180° begrenzt ist.

Eine mögliche Lösung stellt hier beispielsweise die Anwendung der Atan2-Funktion dar. Diese Funktion berücksichtigt aus den beiden Eingangsgrößen (I/Q bzw. Realteil/Imaginärteil) die Lage innerhalb der Quadranten und leitet hieraus die erforderlichen Fallunterscheidungen ab, um ein eindeutige Phasen-/Winkel-Ergebnis über die komplette Ebene hinweg zu ermitteln (also über die gesamten 360° bzw. gesamten $\pm$180°, je nach Definition).

Mögliche Fallunterscheidungen sind nachfolgend aufgeführt.

$$\text{atan2}(y,x) = \begin{cases} \arctan\left(\dfrac{y}{x}\right) & \text{falls } x > 0, \\ \arctan\left(\dfrac{y}{x}\right) + \pi & \text{falls } x < 0 \text{ und } y \geq 0, \\ \arctan\left(\dfrac{y}{x}\right) - \pi & \text{falls } x < 0 \text{ und } y < 0, \\ +\dfrac{\pi}{2} & \text{falls } x = 0 \text{ und } y > 0, \\ -\dfrac{\pi}{2} & \text{falls } x = 0 \text{ und } y < 0, \\ \text{undefiniert} & \text{falls } x = 0 \text{ und } y = 0, \end{cases}$$

bzw.

$$\text{atan2}(y,x) = \begin{cases} \arctan\left(\dfrac{y}{x}\right) & \text{falls } x > 0, \\ \dfrac{\pi}{2} - \arctan\left(\dfrac{x}{y}\right) & \text{falls } y > 0, \\ -\dfrac{\pi}{2} - \arctan\left(\dfrac{x}{y}\right) & \text{falls } y < 0, \\ \arctan\left(\dfrac{y}{x}\right) \pm \pi & \text{falls } x < 0, \\ \text{undefiniert} & \text{falls } x = 0 \text{ und } y = 0, \end{cases}$$

Für die finale technische Anwendung kann es gewünscht sein, dass kein "undefined"-Ergebnis auftritt. Über den strikten 90°-Versatz zwischen den Quadratursignalen Q=y= A*cos(Φ) und I=x=A*sin(Φ) kann man das zunächst evtl. nicht erwarten. Dennoch ist dieser Sonderfall, dass Q und I gleichzeitig zu Null werden, nicht auszuschließen. Dieser tritt immer dann ein, wenn die Signalamplitude A gleich Null wird. In der Praxis ließe sich hierfür ein definierter Winkelwert (z.B. 0°) zuordnen. Alternativ hierzu kann dieser undefinierte Messwert verworfen werden und stattdessen der letzte gültige (d.h. definierte) Messwert verwendet werden.

Es ist anzumerken, dass hier auch die Amplitudeninformation aus der I/Q-Ebene gewonnen wird (Amplitude = $\sqrt{(I^2 + Q^2)}$). Dieser Ansatz bietet zusätzlich die Möglichkeit, eine Einseitenband-Demodulation (SSB, englisch: single side band) Demodulation in Anwendung zu bringen um evtl. Störungen aus dem unteren oder oberen Seitenband (USB, OSB) zu unterdrücken. Beide Seitenbänder haben die gleiche Nutzinformation, so dass ein gestörtes Seitenband als solches komplett unterdrückt werden kann. Hierzu können verschiedene Verfahren eingesetzt werden, die sich gut für die digitalen Implementierung eignen und bereits bekannt sind.

Beispielsweise kann ein Phasing Verfahren ( welches auch als Direct Conversion bezeichnet werden kann) eingesetzt werden; erforderliche Zusatzkomponenten sind einfach und mit überschaubarem Hardware- sowie Rechenaufwand auf digitaler Ebene implementierbar (beispielsweise sind ein Hilbert-Transformer, ein Summierer sowie ein Subtrahierer zu implementieren, wobei restliche Komponenten (wie beispielsweise ein IQ-Mischer mit nachgelagerten Tiefpass-/Basisbandfiltern) bereits vorhanden sein können). Alternativ könnte beispielsweise auch eine Weaver Demodulator eingesetzt werden.

In einer Ausführungsform kann die Informationen beider Seitenbänder verarbeitet werden und es können mit diesen Informationen die nachfolgenden Stufen gespeist werden. Die nachfolgenden Stufen können in diesem Fall auch doppelt vorhanden sein. Somit kann insbesondere unter sich häufig wechselnden bzw. nicht vorhersehbaren Störbedingungen ein Gewinn an Robustheit erlangt werden.

Als mögliche Störursachen kommen hier sowohl optische als auch elektromagnetische Störquellen in Betracht, die ungewollte Frequenzen im entsprechenden Nutzband einkoppeln.

Gemäß verschiedenen Ausführungsformen stehen die Amplituden- und Phaseninformationen für die Codelesung/Grauwertverarbeitung bzw. für die Abstandsinformation (z.B. für Autofokussteuerung) zur Verfügung.

In verschiedenen Ausführungsformen wird ein Autofokuskonzept bzw. die Erweiterung der Schärfentiefe anhand der ermittelten Abstandsdaten bereitgestellt. Anstatt mehrere Fixfokus-Laser-Sendemodule einzusetzen, kann eine einzige motorische Laser-Sendereinheit mit variablem Fokus zur Anwendung kommen. Je nach gemessenem Abstand wird die dazu passende Fokuslage angefahren (wobei beispielsweise ein Verstell-Motor eine Kollimator-Linse an eine entsprechende Position versetzt).

Als Antriebselement für die "motorische Laser-Sendereinheit mit variablem Fokus" können Schrittmotoren oder andere Bauarten von Servomotoren (wie z.B. PMSM-(Permanentmagnet-Synchronmotoren)-Motoren) eingesetzt werden. Hierdurch wird eine Rotationsbewegung in eine Hubbewegung transferiert, um hiermit den Abstand der Kollimator-Linse innerhalb der Sendeoptik zu bewegen. Alternativ können Tauchspulen- oder Piezo-Aktor (Hub-Aktor), oder eine Flüssiglinse mit variabler Brennweite verwendet werden, um die Fokuslage zu ändern.

Die beiden korrelierten Informationen (beispielsweise Abstand und Grauwert) können optional für nachgelagerte Korrekturen verwendet werden, beispielsweise für eine remissionsabhängige Abstandskorrektur und/ oder zur Verbesserung von dynamischen Abstandssprüngen beispielsweise bei Kantentreffern auf Objekten.

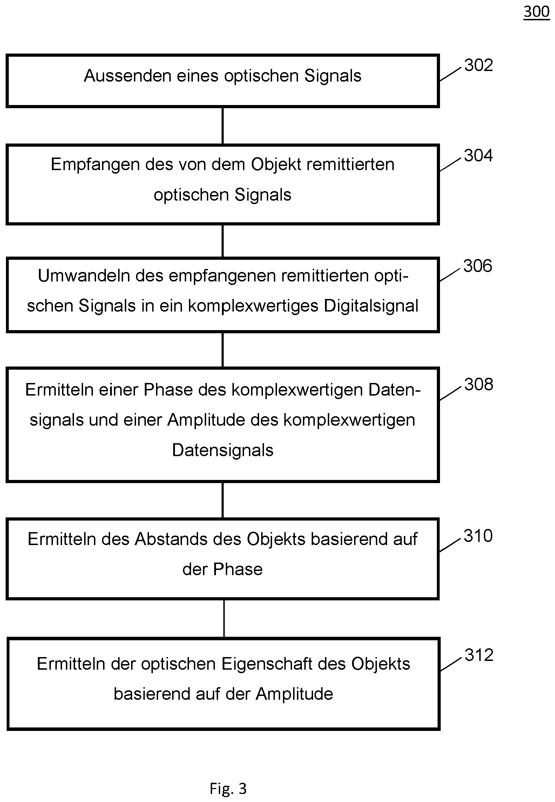

Fig. 3 zeigt ein Flussdiagramm 300, das ein Verfahren zum Ermitteln eines Abstands eines Objekts und einer optischen Eigenschaft des Objekts gemäß einer Ausführungsform veranschaulicht. In 302 wird ein optisches Signal ausgesendet. In 304 wird ein von dem Objekt remittiertes optisches Signal empfangen. In 306 wird das empfangene remittierte optische Signal in ein komplexwertiges Digitalsignal umgewandelt. In 308 werden eine Phase des komplexwertigen Datensignals und eine Amplitude des komplexwertigen Datensignals ermittelt. In 310 wird der Abstand des Objekts basierend auf der Phase ermittelt. In 312 wird die optische Eigenschaft des Objekts basierend auf der Amplitude ermittelt.

In einer Ausführungsform erfolgt das Umwandeln vor dem Ermitteln der Phase und der Amplitude.

In einer Ausführungsform enthält das Verfahren ferner einen Schritt zum Ändern einer Fokuslage zum Empfangen des von dem Objekt remittierten optischen Signals basierend auf der Abstandsinformation.

In einer Ausführungsform ist die optische Eigenschaft ein Grauwert oder eine Farbe eines Objekts, von dem das optische Signal remittiert wird.

In einer Ausführungsform ist die Phase eine Phase des empfangenen remittierten optischen Signals relativ zu dem ausgesendeten optischen Signal.

In einer Ausführungsform werden die Amplitude und/ oder die Phase sampleweise für einen eindimensionalen Datensatz oder einen zweidimensionalen Datensatz ermittelt.

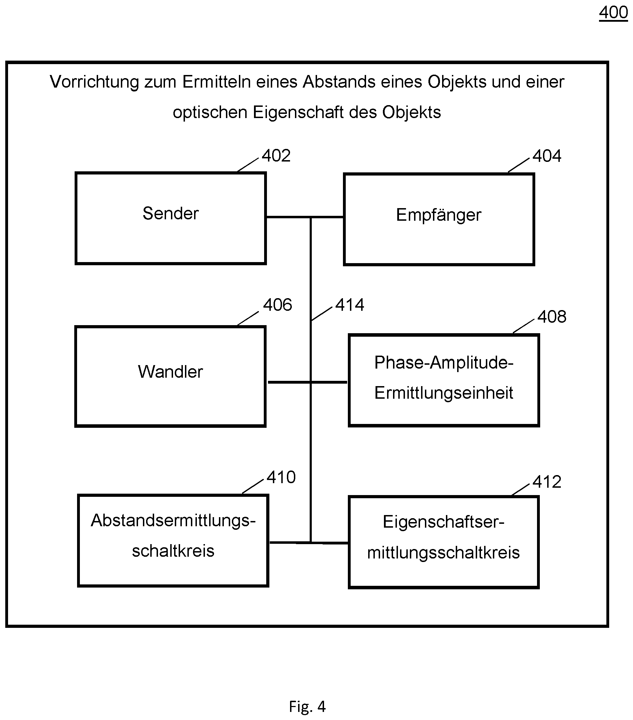

Fig. 4 zeigt eine Vorrichtung 400 zum Ermitteln eines Abstands eines Objekts und einer optischen Eigenschaft des Objekts gemäß einer Ausführungsform. Die Vorrichtung 400 enthält einen Sender 402, einen Empfänger 404, einen Wandler 406, eine Phase-Amplitude-Ermittlungseinheit 408, einen Abstandsermittlungsschaltkreis 410 und einen Eigenschaftsermittlungsschaltkreis 412. Der Sender 402, der Empfänger 404, der Wandler 406, die Phase-Amplitude-Ermittlungseinheit 408, die Abstandsermittlungsschaltkreis 410 und die Eigenschaftsermittlungsschaltkreis 412 können über eine Verbindung 414, beispielsweise eine optische oder elektrische Verbindung, beispielsweise eine Leitung oder einen Bus, miteinander verbunden sein.

Der Sender 402 ist eingerichtet zum Aussenden eines optischen Signals. Der Empfänger 404 ist eingerichtet zum Empfangen des von dem Objekt remittierten optischen Signals. Der Wandler 406 ist eingerichtet zum Umwandeln des empfangenen remittierten optischen Signals in ein komplexwertiges Digitalsignal. Die Phase-Amplitude-Ermittlungseinheit 408 ist eingerichtet zum Ermitteln einer Phase des komplexwertigen Datensignals und einer Amplitude des komplexwertigen Datensignals. Der Abstandsermittlungsschaltkreis 410 ist eingerichtet zum Ermitteln des Abstands des Objekts basierend auf der Phase. Der Eigenschaftsermittlungsschaltkreis 412 ist eingerichtet zum Ermitteln der optischen Eigenschaft des Objekts basierend auf der Amplitude.

Gemäß einer Ausführungsform enthält die Phase-Amplitude-Ermittlungseinheit 408 einen Phasenermittlungsschaltkreis und einen von dem Phasenermittlungsschaltkreis unabhängigen Amplitudenermittlungsschaltkreis, wobei der Phasenermittlungsschaltkreis eingerichtet ist zum Ermitteln der Phase des komplexwertigen Datensignals und wobei der Amplitudenermittlungsschaltkreis eingerichtet ist zum Ermitteln der Amplitude des komplexwertigen Datensignals.

Gemäß einer Ausführungsform ist die Phase-Amplitude-Ermittlungseinheit 408 eingerichtet zum parallelen Ermitteln der Phase des komplexwertigen Datensignals und der Amplitude des komplexwertigen Datensignals.

Gemäß einer Ausführungsform ist der Wandler 406 eingerichtet zum Umwandeln vor dem Ermitteln der Phase und der Amplitude.

Gemäß einer Ausführungsform ist der Empfänger 404 eingerichtet zum Ändern einer Fokuslage zum Empfangen des von dem Objekt remittierten optischen Signals basierend auf der Abstandsinformation.

Gemäß einer Ausführungsform ist die optische Eigenschaft ein Grauwert oder eine Farbe eines Objekts, von dem das optische Signal remittiert wird.

Gemäß einer Ausführungsform ist die Phase eine Phase des empfangenen remittierten optischen Signals relativ zu dem ausgesendeten optischen Signal.

Gemäß einer Ausführungsform werden die Amplitude und/ oder die Phase sampleweise für einen eindimensionalen Datensatz oder einen zweidimensionalen Datensatz ermittelt.

Mit den Verfahrend und Vorrichtungen gemäß den verschiedenen Ausführungsformen kann bei bewegten Objekten ein Abstand (oder eine Raumpositionierung) einem Barcode (oder einem Objekt) zugeordnet werden. Die Bewegungsgeschwindigkeit der Codes bzw. Objekte und/ oder ein zurückgelegter Bewegungsvektor (Weg/Richtung) der Codes bzw. Objekte kann ermittelt werden.

Bei bewegten Objekten auf Band bzw. bei stillstehenden Objekten in Verbindung mit z.B. einem Schwingspiegel kann ein Einscannen von 2D-Informationen, die über einen Barcode hinausgehen, ermöglicht werden; beispielsweise können Warnlogos und/ oder Schriften von Paketen und/ oder anderen Objekten (z.B. unter Zuhilfenahme von bild-/kamerabasierter Grauwertbildverwarbeitungsalgorithmen) ermittelt werden.

In verschiedenen Ausführungsformen können 3D-Grauwertbilder und/ oder Profile (beispielsweise mit Tiefeninformation) bereitgestellt werden, und/ oder es können geometrische Objektkonturen gescannt und/ oder eine Volumenberechnung ausgeführt werden; ferner kann eine Korrelation all dieser Informationen ermittelt werden. Beispielsweise können Grauwert-Information und dazugehörende Abstands-Information in jedem einzelnen Datensample vorhanden sein (beispielsweise "in einem Guss" als komplexer Datentyp). Dadurch kann der Aufwand von zeitlichen Diskorrelationen von Grauwert- und Abstandsmessdaten entfallen. Ferner kann ein überlegenes Pulsantwortverhalten von Grau- und Abstandswerten erreicht werden, und die Korrekturaufwände können verringert werden.

Mit den Verfahren und Vorrichtungen gemäß verschiedener Ausführungsformen können geringere schaltungstechnische Aufwände und ein geringer Bauteil- und Materialeinsatz erreicht werden, beispielsweise durch Wegfall des kompletten separaten Abstandsmesspfades.

Durch eine software-defined Implementierung können Signalpfadanpassungen und/ oder Optimierungen jederzeit möglich sein, beispielsweise auch bei einem "fertigen" Produkt, und es können Parallelsignalpfade einfach integrierbar sein. Durch Parallelsignalpfade kann eine hohe Sensor-Performance möglich sein, beispielsweise mit automatischer Codeadaption, Umgang großer Codestreubreite und konträrem Setup hierzu. Unter "konträrem Setup" können hier widersprüchliche Geräteeinstellungen verstanden werden, die sich nur geringfügig oder sogar überhaupt nicht überschneiden. Ein Setup ist in der Regel auf individuelle Code- und/oder Umgebungs-Eigenschaften optimiert, um für den speziellen Anwendungsfall die bestmögliche Sensor-/Codeleseperformance zu erzielen. Es können schon unterschiedliche Codekontraste (z.B. schwarz auf weiß bzw. grau/hellgrau auf weiß) ein anderes Gerätesetup innerhalb einer Applikation erfordern, um eine zufriedenstellende Code-Leserate zu erreichen. Um mit nur einem Setup beide Fälle behandeln zu können, kann mit Einbußen zu rechnen sein (was anschaulich als teilweise konträres Setup als "Allround-Setup" betrachtet werden kann, bei dem von allem etwas aber nichts optimal berücksichtigt werden kann). In extremen Anwendungsfällen kann es sogar möglich sein, dass es kein einzelnes Setup gibt, um alle möglichen Variationen an Lesebedingungen sicher abzudecken (in diesem Fall kann man von einem völlig konträren Setup sprechen). In einer Ausführungsform können die Setup-Einstellungen in zeitlicher Abfolge umgeschaltet werden. In einer weiteren Ausführungsform kann eine parallele, und somit gleichzeitige Anwendung solcher konträrer Setups bereitgestellt werden; dies kann beispielsweise durch Parallelsignalpfade, wie oben beschrieben, ermöglicht werden.

Die erfindungsgemäßen Vorrichtungen ermöglichen eine Platzeinsparung und/ oder kompaktere Bauweise, und/ oder neue applikatorische Möglichkeiten und/ oder geringere Herstell- und Gerätekosten.

Was hierin für eine Vorrichtung beschrieben wurde, kann analog für ein Verfahren gelten und umgekehrt.

**Bezugszeichenliste**

100 Diagramm zur Veranschaulichung einer Amplitudenmodulation im Spektrum gemäß einer Ausführungsform
102 horizontal Achse
104 vertikale Achse
106 Frequenzspektrum
108 Bereich, in dem in ins Basisband heruntergemischtes Barcodesignal liegt
110 Trägerfrequenz

112    Bandbreite der Nutzinformation des abgescannten Barcodesignals
114    unteres Seitenband
116    oberes Seitenband

200    Diagramm, das ein I/Q-Verfahren gemäß einer Ausführungsform veranschaulicht
202    Empfangs-Signal
204    Referenzfrequenz
206    I-Anteil
208    Phasenverschiebung
210    Q-Anteil

250    Veranschaulichung von Real- und Imaginärteilen
252    horizontale Achse
254    vertikale Achse

300    Flussdiagramm, das ein Verfahren zum Ermitteln eines Abstands eines Objekts und einer optischen Eigenschaft des Objekts gemäß einer Ausführungsform veranschaulicht
302    Schritt des Aussendens eines optischen Signals
304    Schritt des Empfangens des von dem Objekt remittierten optischen Signals
306    Schritt des Umwandelns des empfangenen remittierten optischen Signals in ein komplexwertiges Digitalsignal
308    Schritt des Ermittelns einer Phase des komplexwertigen Datensignals und einer Amplitude des komplexwertigen Datensignals
310    Schritt des Ermittelns des Abstands des Objekts basierend auf der Phase
312    Schritt des Ermitteln der optischen Eigenschaft des Objekts basierend auf der Amplitude

400    Vorrichtung zum Ermitteln eines Abstands eines Objekts und einer optischen Eigenschaft des Objekts gemäß
       einer Ausführungsform
402    Sender
404    Empfänger
406    Wandler
408    Phase-Amplitude-Ermittlungseinheit
410    Abstandsermittlungsschaltkreis
412    Eigenschaftsermittlungsschaltkreis
414    Verbindung

**Patentansprüche**

1.  Verfahren zum Ermitteln eines Abstands eines Objekts und einer optischen Eigenschaft des Objekts, das Verfahren
    aufweisend:

    Aussenden (302) eines optischen Signals;
    Empfangen (304) des von dem Objekt remittierten optischen Signals;
    Umwandeln (306) des empfangenen remittierten optischen Signals in ein komplexwertiges Digitalsignal;
    Ermitteln (308) einer Phase des komplexwertigen Datensignals und einer Amplitude des komplexwertigen
    Datensignals;
    Ermitteln (310) des Abstands des Objekts basierend auf der Phase; und
    Ermitteln der optischen Eigenschaft des Objekts basierend auf der Amplitude.

2.  Verfahren nach Anspruch 1,
    wobei das Umwandeln (306) vor dem Ermitteln der Phase und der Amplitude erfolgt.

3.  Verfahren nach einem der vorstehenden Ansprüche, ferner aufweisend:
    Ändern einer Fokuslage zum Empfangen des von dem Objekt remittierten optischen Signals basierend auf der
    Abstandsinformation.

4.  Verfahren nach einem der vorstehenden Ansprüche,
    wobei die optische Eigenschaft ein Grauwert oder eine Farbe eines Objekts, von dem das optische Signal remittiert
    wird, ist.

**5.** Verfahren nach einem der vorstehenden Ansprüche,
wobei die Phase eine Phase des empfangenen remittierten optischen Signals relativ zu dem ausgesendeten optischen Signal ist.

**6.** Verfahren nach einem der vorstehenden Ansprüche,
wobei die Amplitude und/ oder die Phase sampleweise für einen eindimensionalen Datensatz oder einen zweidimensionalen Datensatz ermittelt werden.

**7.** Vorrichtung (400) zum Ermitteln eines Abstands eines Objekts und einer optischen Eigenschaft des Objekts, die Vorrichtung aufweisend:

Sender (402), eingerichtet zum Aussenden eines optischen Signals;
Empfänger (404), eingerichtet zum Empfangen des von dem Objekt remittierten optischen Signals;
Wandler (406), eingerichtet zum Umwandeln des empfangenen remittierten optischen Signals in ein komplexwertiges Digitalsignal;
Phase-Amplitude-Ermittlungseinheit (408), eingerichtet zum Ermitteln einer Phase des komplexwertigen Datensignals und einer Amplitude des komplexwertigen Datensignals;
Abstandsermittlungsschaltkreis (410), eingerichtet zum Ermitteln des Abstands des Objekts basierend auf der Phase; und
Eigenschaftsermittlungsschaltkreis (412), eingerichtet zum Ermitteln der optischen Eigenschaft des Objekts basierend auf der Amplitude.

**8.** Vorrichtung nach Anspruch 7,
wobei die Phase-Amplitude-Ermittlungseinheit (408) einen Phasenermittlungsschaltkreis und einen von dem Phasenermittlungsschaltkreis unabhängigen Amplitudenermittlungsschaltkreis aufweist, wobei der Phasenermittlungsschaltkreis eingerichtet ist zum Ermitteln der Phase des komplexwertigen Datensignals und wobei der Amplitudenermittlungsschaltkreis eingerichtet ist zum Ermitteln der Amplitude des komplexwertigen Datensignals.

**9.** Vorrichtung nach Anspruch 7,
wobei die Phase-Amplitude-Ermittlungseinheit (408) eingerichtet ist zum parallelen Ermitteln der Phase des komplexwertigen Datensignals und der Amplitude des komplexwertigen Datensignals.

**10.** Vorrichtung nach einem der Ansprüche 7 bis 9,
wobei der Wandler (406) eingerichtet ist zum Umwandeln vor dem Ermitteln der Phase und der Amplitude.

**11.** Vorrichtung nach einem der Ansprüche 7 bis 9,
wobei der Empfänger (404) eingerichtet ist zum Ändern einer Fokuslage zum Empfangen des von dem Objekt remittierten optischen Signals basierend auf der Abstandsinformation.

**12.** Vorrichtung nach einem der Ansprüche 7 bis 11,
wobei die optische Eigenschaft ein Grauwert oder eine Farbe eines Objekts, von dem das optische Signal remittiert wird, ist.

**13.** Vorrichtung nach einem der Ansprüche 7 bis 12,
wobei die Phase eine Phase des empfangenen remittierten optischen Signals relativ zu dem ausgesendeten optischen Signal ist.

**14.** Vorrichtung nach einem der Ansprüche 7 bis 13,
wobei die Amplitude und/ oder die Phase sampleweise für einen eindimensionalen Datensatz oder einen zweidimensionalen Datensatz ermittelt werden.

**15.** Barcodescanner, aufweisend die Vorrichtung (400) nach einem der Ansprüche 7 bis 14 und einen Aktuator, eingerichtet zum Einstellen einer Fokuslage des Barcodescanners.

**Geänderte Patentansprüche gemäss Regel 137(2) EPÜ.**

**1.** Verfahren zum Ermitteln eines Abstands eines Objekts und einer optischen Eigenschaft des Objekts, das Verfahren aufweisend:

Aussenden (302) eines optischen Signals;

Empfangen (304) des von dem Objekt remittierten optischen Signals;

Umwandeln (306) des empfangenen remittierten optischen Signals in ein komplexwertiges Digitalsignal;

Ermitteln (308) einer Phase des komplexwertigen Datensignals und einer Amplitude des komplexwertigen Datensignals;

Ermitteln (310) des Abstands des Objekts basierend auf der Phase;

Ermitteln der optischen Eigenschaft des Objekts basierend auf der Amplitude; und

Realisieren einer Autofokusfunktion eines Barcodescanners basierend auf dem ermittelten Abstand.

2. Verfahren nach Anspruch 1,
wobei das Umwandeln (306) vor dem Ermitteln der Phase und der Amplitude erfolgt.

3. Verfahren nach einem der vorstehenden Ansprüche, ferner aufweisend: Ändern einer Fokuslage zum Empfangen des von dem Objekt remittierten optischen Signals basierend auf der Abstandsinformation.

4. Verfahren nach einem der vorstehenden Ansprüche,
wobei die optische Eigenschaft ein Grauwert oder eine Farbe eines Objekts, von dem das optische Signal remittiert wird, ist.

5. Verfahren nach einem der vorstehenden Ansprüche,
wobei die Phase eine Phase des empfangenen remittierten optischen Signals relativ zu dem ausgesendeten optischen Signal ist.

6. Verfahren nach einem der vorstehenden Ansprüche,
wobei die Amplitude und/ oder die Phase sampleweise für einen eindimensionalen Datensatz oder einen zweidimensionalen Datensatz ermittelt werden.

7. Barcodescanner, aufweisend eine Vorrichtung (400) zum Ermitteln eines Abstands eines Objekts und einer optischen Eigenschaft des Objekts, die Vorrichtung aufweisend:

Sender (402), eingerichtet zum Aussenden eines optischen Signals;

Empfänger (404), eingerichtet zum Empfangen des von dem Objekt remittierten optischen Signals;

Wandler (406), eingerichtet zum Umwandeln des empfangenen remittierten optischen Signals in ein komplexwertiges Digitalsignal;

Phase-Amplitude-Ermittlungseinheit (408), eingerichtet zum Ermitteln einer Phase des komplexwertigen Datensignals und einer Amplitude des komplexwertigen Datensignals;

Abstandsermittlungsschaltkreis (410), eingerichtet zum Ermitteln des Abstands des Objekts basierend auf der Phase; und

Eigenschaftsermittlungsschaltkreis (412), eingerichtet zum Ermitteln der optischen Eigenschaft des Objekts basierend auf der Amplitude;

wobei der Barcodescanner ferner aufweist einen Aktuator, eingerichtet zum Einstellen einer Fokuslage des Barcodescanners basierend auf dem ermittelten Abstand.

8. Barcodescanner nach Anspruch 7,
wobei die Phase-Amplitude-Ermittlungseinheit (408) einen Phasenermittlungsschaltkreis und einen von dem Phasenermittlungsschaltkreis unabhängigen Amplitudenermittlungsschaltkreis aufweist, wobei der Phasenermittlungsschaltkreis eingerichtet ist zum Ermitteln der Phase des komplexwertigen Datensignals und wobei der Amplitudenermittlungsschaltkreis eingerichtet ist zum Ermitteln der Amplitude des komplexwertigen Datensignals.

9. Barcodescanner nach Anspruch 7,
wobei die Phase-Amplitude-Ermittlungseinheit (408) eingerichtet ist zum parallelen Ermitteln der Phase des komplexwertigen Datensignals und der Amplitude des komplexwertigen Datensignals.

10. Barcodescanner nach einem der Ansprüche 7 bis 9,
wobei der Wandler (406) eingerichtet ist zum Umwandeln vor dem Ermitteln der Phase und der Amplitude.

11. Barcodescanner nach einem der Ansprüche 7 bis 9,
wobei der Empfänger (404) eingerichtet ist zum Ändern einer Fokuslage zum Empfangen des von dem Objekt remittierten optischen Signals basierend auf der Abstandsinformation.

12. Barcodescanner nach einem der Ansprüche 7 bis 11,
wobei die optische Eigenschaft ein Grauwert oder eine Farbe eines Objekts, von dem das optische Signal remittiert wird, ist.

13. Barcodescanner nach einem der Ansprüche 7 bis 12,
wobei die Phase eine Phase des empfangenen remittierten optischen Signals relativ zu dem ausgesendeten optischen Signal ist.

14. Barcodescanner nach einem der Ansprüche 7 bis 13,
wobei die Amplitude und/ oder die Phase sampleweise für einen eindimensionalen Datensatz oder einen zwei-dimensionalen Datensatz ermittelt werden.

Fig. 1

200

$\vec{Z}$

I-Mischer

Empfangs-Signal
(ZF-Signal)

202

206

I

Q-Mischer

210

Q

204

208

Referenzfrequenz

90°

Fig. 2A

250

Fig. 2B

300

| Aussenden eines optischen Signals | 302 |

| Empfangen des von dem Objekt remittierten optischen Signals | 304 |

| Umwandeln des empfangenen remittierten optischen Signals in ein komplexwertiges Digitalsignal | 306 |

| Ermitteln einer Phase des komplexwertigen Datensignals und einer Amplitude des komplexwertigen Datensignals | 308 |

| Ermitteln des Abstands des Objekts basierend auf der Phase | 310 |

| Ermitteln der optischen Eigenschaft des Objekts basierend auf der Amplitude | 312 |

Fig. 3

400

Vorrichtung zum Ermitteln eines Abstands eines Objekts und einer
optischen Eigenschaft des Objekts

402

| Sender |

404

| Empfänger |

406

414

| Wandler |

408

| Phase-Amplitude-
Ermittlungseinheit |

410

| Abstandsermittlungs-
schaltkreis |

412

| Eigenschaftser-
mittlungsschaltkreis |

Fig. 4

**EUROPÄISCHER RECHERCHENBERICHT**

Europäisches Patentamt
European Patent Office
Office européen des brevets

Nummer der Anmeldung

EP 24 17 6598

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KR 101 132 642 B1 (UNIV SOGANG IND UNIV COOP FOUN [KR]; UNIV YONSEI IACF [KR]) 2. April 2012 (2012-04-02) * Zusammenfassung; Abbildung 1 * * Absatz [0047] - Absatz [0058] * * Absatz [0064] - Absatz [0080] * ----- | 1-3, 5-11,13, 14 | INV. G01S17/36 G01S17/88 G06K7/10 |
| X | US 2014/327900 A1 (RITTER DAVID W [US] ET AL) 6. November 2014 (2014-11-06) * Zusammenfassung; Abbildungen 1-8 * * Absatz [0021] - Absatz [0038] * * Absatz [0045] - Absatz [0047] * ----- | 1,2,4, 6-10,12, 14 | |
| A | US 5 844 227 A (SCHMIDT MARK C [US] ET AL) 1. Dezember 1998 (1998-12-01) * das ganze Dokument * ----- | 1-15 | |

**RECHERCHIERTE SACHGEBIETE (IPC)**

G01S
G06K

Der vorliegende Recherchenbericht wurde für alle Patentansprüche erstellt

| Recherchenort | Abschlußdatum der Recherche | Prüfer |
|---|---|---|
| München | 28. Oktober 2024 | López de Valle, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.** EP 24 17 6598

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2024

| Im Recherchenbericht angeführtes Patentdokument | Datum der Veröffentlichung | Mitglied(er) der Patentfamilie | Datum der Veröffentlichung |
|---|---|---|---|
| KR 101132642 B1 | 02-04-2012 | KEINE | |
| US 2014327900 A1 | 06-11-2014 | CN 102822691 A | 12-12-2012 |
| | | CN 102822759 A | 12-12-2012 |
| | | CN 106052862 A | 26-10-2016 |
| | | TW 201145075 A | 16-12-2011 |
| | | TW 201202730 A | 16-01-2012 |
| | | TW 201202731 A | 16-01-2012 |
| | | TW 201203008 A | 16-01-2012 |
| | | TW 201205047 A | 01-02-2012 |
| | | TW 201432283 A | 16-08-2014 |
| | | US 2011180693 A1 | 28-07-2011 |
| | | US 2011180709 A1 | 28-07-2011 |
| | | US 2011181254 A1 | 28-07-2011 |
| | | US 2011181861 A1 | 28-07-2011 |
| | | US 2011181892 A1 | 28-07-2011 |
| | | US 2011182519 A1 | 28-07-2011 |
| | | US 2014327900 A1 | 06-11-2014 |
| | | WO 2011094360 A1 | 04-08-2011 |
| | | WO 2011094361 A1 | 04-08-2011 |
| | | WO 2011094362 A1 | 04-08-2011 |
| | | WO 2011094364 A1 | 04-08-2011 |
| | | WO 2011094365 A1 | 04-08-2011 |
| | | WO 2011094366 A1 | 04-08-2011 |
| US 5844227 A | 01-12-1998 | KEINE | |

EPO FORM P0461

Für nähere Einzelheiten zu diesem Anhang : siehe Amtsblatt des Europäischen Patentamts, Nr.12/82